# EUROPEAN PATENT SPECIFICATION

(11) **EP 3 695 960 B1**
(45) Date of publication and mention of the grant of the patent: **07.06.2023**
(21) Application number: 20156698.1
(22) Date of filing: 11.02.2020
(51) Int. Cl.: B30B 9/30, F16P 3/08, B30B 15/28, H01H 3/16, H01H 9/22

(54) **BALING PRESS AND METHOD OF OPERATING A BALING PRESS**
BALLENPRESSE UND VERFAHREN ZUM BETREIBEN EINER BALLENPRESSE
PRESSE À BALLES ET PROCÉDÉ DE FONCTIONNEMENT D'UNE PRESSE À BALLES

(30) Priority: 12.02.2019 NL 2022562
(43) Date of publication of application: 19.08.2020
(73) Proprietor: Bollegraaf Patents and Brands B.V., 9902 AM Appingedam (NL)
(72) Inventor: Hogervorst, Wouter Hendrik, 9902 AM Appingedam (NL)
(74) Representative: V.O.

(56) References cited:
- EP-A1- 1 752 701
- CN-A- 108 438 659
- DE-A1- 2 815 300
- US-A- 3 608 476
- US-A- 3 762 311
- US-A- 3 855 918
- US-A- 5 428 864
- US-A1- 2007 089 617
- US-A1- 2010 071 570

## Description

### FIELD AND BACKGROUND OF THE INVENTION

The present invention relates to a baling press and to a method of operating a baling press.

To facilitate storage, handling and transportation of loose material, such as waste paper and cardboard, waste plastic, garbage waste, straw, it is usual to press the material into bales.

To prepare the bales, the material is compressed in a baling press. A baling press typically includes a bale pressing channel in which a pressing ram is reciprocally movable to and fro in a pressing chamber, new material to be baled being added each time after the press has been retracted. The counter pressure against which the bales are pressed is obtained by resistance encountered by the material as it is pressed through the pressing channel, which, to that end, has a cross-section that decreases in downstream direction over at least a portion of its length. Initial counter pressure may be obtained by mounting obstacles in the pressing channel.

For facilitating separation of the pressed material into distinct bales and for keeping the bales together, string material is usually tied around the bales. The string material is for instance wire or rope material. The wire material is for instance steel or plastic wire and the rope material is for instance plastic or natural fiber material that may be twisted or braided and include one or more strands of twisted fiber material. A number of loops of the string extending around the bale is usually obtained by feeding strings from two sources along opposite sides of the bale to be formed, tying the strings together near the downstream end of the bale to be formed and tying together the strings near the upstream end of the bale after the material for forming that bale has been pressed.

It sometimes occurs that operators have to enter the pressing chamber for solving problems such as threading in and tying up string material after it has broken or removing material that blocks the pressing ram.

To allow persons to enter the pressing chamber, a closure in the form of a door or hatch is usually provided in a side wall of the pressing chamber. If a person (or only a portion of a body of a person e.g. an upper body portion) is in the pressing chamber, it is important that the press and the feeding structure are prevented from operating. Unwanted operation of the press while a person is in the pressing chamber can cause injury due to burying the person under material to be pressed or even compressing that person. To avoid such accidents, a safety switch is mounted to the press, which causes power supply to the press to be interrupted when the closure is opened.

It is noted that US 5 428 864 A discloses a refuse collecting machine in which a collection hose 14 sucks refuse into a delivery chamber 30 containing a rotating perforated wheel for separating lighter weight refuse from the air flow to a fan, and the refuse then drops into a rotary compression screw to be compressed into a replaceable bag supported at the machine outlet. Via a door 55, any stuck items can be freed by hand if necessary, and also maintenance and servicing can be carried out. The door 55 is controlled by a timer controlled latch so that it cannot be opened until all the rotating parts of the machine have come to a stop after switching off the engine of the machine.

It is further noted that US 3 608 476 A discloses a baling press according to the pre-characterizing portion of the appended independent claim 1 and a method of operating a baling press according to the pre-characterizing portion of the appended independent claim 7.

### SUMMARY OF THE INVENTION

It is an object of the present invention to provide a solution that further increases safety for a person who completely or partially enters or has entered the pressing chamber via the opening that is closeable by the closure.

According to the invention, this object is achieved by providing a baling press according to claim 1 and by a method of operating a baling press according to claim 7.

Because the lock is operated by the operating member for unlocking the closure or allowing unlocking of the closure only if the operating member is operated by the feeding chute valve in or near its closed position, the closure can only be opened if the feeding chute valve is closed. Thus it is avoided that material to be pressed can drop onto a person or a portion of a person in the pressing chamber even though the baling press is cut off from the power supply and thus inactive. Material may for instance drop down the feeding chute even though a baling press is inactive, for instance if material has become stuck in the feeding chute but loosens from the feeding chute. Amounts of material dropping down in such a situation can be several thousands of kilograms, which is enough to bury a person or cause severe injury. Also material may just tip over a downstream end of a feeding conveyor. Although such amounts of material are typically smaller, dropping of the material onto a person can still cause injury and is also undesired hygienically.

Particular elaborations and embodiments of the invention are set forth in the dependent claims.

Further features, effects and details of the invention appear from the detailed description and the drawings.

### BRIEF DESCRIPTION OF THE DRAWINGS

Fig. 1 is a schematic, partially cut-away side view of an example of a baling press according to the invention;
Fig. 2 is a schematic, partially cut-away side view of an operating member of a first example of a baling press according to the invention;
Fig. 3 is a schematic, partially cut-away side view of a lock of a first example of a baling press according to the invention;
Fig. 4 is a schematic side view of an operating member and a lock coupled thereto of a second example of a baling press according to the invention; and
Fig. 5 is a schematic side view of an operating member and a lock coupled thereto of a third example of a baling press according to the invention.

### DETAILED DESCRIPTION

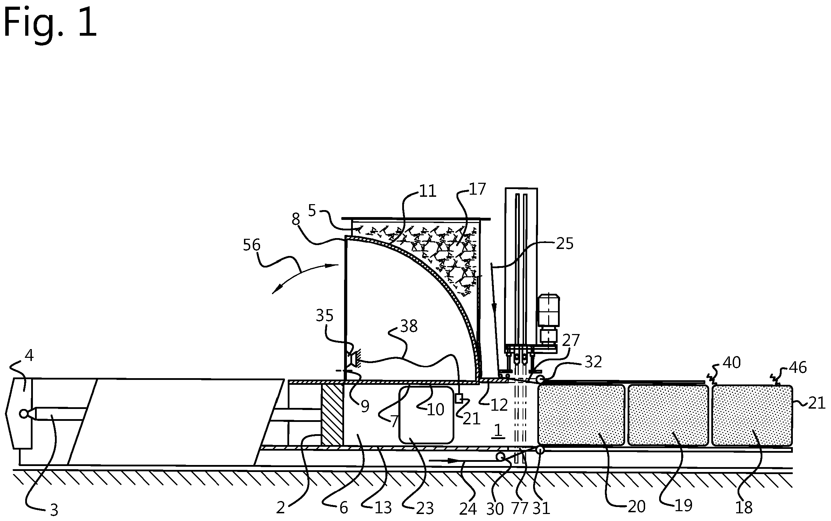

The baling press shown in Fig. 1 has a pressing channel 1 in which a ram 2 is displaceable by a hydraulic cylinder 3 mounted between the ram 2 and a suspension bracket 4. The ram 2 is shown in its most retracted position. A feeding chute 5 communicates with a pressing chamber portion 6 of the pressing channel 1 via a passage 7 forming a downstream end of the feeding chute 5. The pressing chamber portion 6 is defined by the stroke volume of a face of the ram 2 facing in pressing direction into the pressing channel 1.

A feeding chute valve 8 is pivotable about a pivotal axis 9 and has a flat wall 10 which, in the closed position shown, closes off the feeding chute 5 near the pressing channel 1 and, in opened position, is disposed in a wall of the feeding chute 5. If, as in the present example, the feeding chute valve 8 closes off the passage from the feeding chute 5 to the pressing channel at a lower end of the feeding chute 5, there is no section of the feeding chute 5 below the feeding chute valve 8 from which material can still drop into the pressing chamber if the feeding chute valve 8 is closed. The prepress valve 8 furthermore has a surface 11 substantially curved around the pivotal axis 9, which surface in closed position bounds the feeding chute 5 in axial direction.

Material 17 to be pressed may already be deposited into the feeding chute 5, while the prepress valve 8 is closed. When the prepress valve 8 is opened, all or a portion of the material to be pressed drops into the pressing chamber 6 and may form a pile aside the prepress valve 8. When the prepress valve 8 is closed again, if a pile has formed aside the prepress valve 8, a volume of the material is precompressed in the pressing chamber 6 by the closing of the prepress valve 8. Next, the pressing ram 2 is moved to its most forward position compressing the precompressed material while simultaneously new material to be pressed can be deposited into the feeding chute 5.

The feeding chute valve may also be in a form that is not suitable for prepressing material in the pressing chamber, for instance in the form of a slide for intermittently closing off and making free the passage from the feeding chute into the pressing chamber portion of the pressing channel. Although it is advantageous if the feeding chute valve is also provided and arranged for closing off the feeding chute during pressing by the pressing ram when the baling press is in normal operation, the feeding chute valve may also be provided and arranged only for closing off the feeding chute for preventing that material drops down onto personnel working in the pressing chamber. To that end, the valve may for instance be in the form of a plate or grid and the feeding chute can be provided with a slot and guide for receiving and holding the plate or grid via the slot and supported by the guide in a position extending across the feeding chute, so it is prevented that significant amounts of material can drop into the pressing chamber if the plate or grid is positioned such that it operates the operating member for causing or allowing the lock to be unlocked.

Depending on the compressibility of the material 17, compressing of a volume of material for forming a bale 18-20 may require several cycles of retracting the ram 2 in a direction opposite to the pressing direction, feeding material with the prepress valve 8 open, closing the prepress valve 8 while optionally prepressing and compressing by advancing the ram in pressing direction. Thus, each bale may be obtained by a single or a plurality of compression cycles of the pressing ram 2 each time compressing material newly fed into the pressing chamber 6.

Counter pressure in the pressing channel 1 against which a bale is pressed in the pressing chamber 6 and pushed out of the pressing chamber 6 is obtained by resistance encountered by the material of previously compressed material formed into bales 18, 19, 20 as it is pressed through the pressing channel 1 while compressed between top and bottom walls 12, 13 and side walls of the pressing channel 1. To that end, the pressing channel 1 may for instance have a cross-section that decreases in downstream direction over at least a portion of its length and/or one or more walls of at least a downstream portion of the pressing channel may resiliently be pressed inwardly. Initial counter pressure may be obtained by mounting obstacles in the pressing channel 1 that are pressed out by the first bale.

For facilitating separation of compressed material into discrete bales and for facilitating manipulation, transport and for preventing bales from falling apart, loops 21, 22 of string material are tied around each bale 18-20. The string material may for instance be wire or rope material. The wire material may for instance be steel or plastic wire and the rope material may for instance be plastic or natural fiber material that may be twisted or braided and include one or more strands of twisted fiber material. In the present example, the string material is wire material that is tied by twisting. However, other string material and other manners of connecting, such as knotting, welding or use of fasteners, can also be applied.

For tying one or more loops of wire material around each bale, one or more (in this example five) lower wires 24 are fed under pressing channel 1. From above, the same number of wires 25 is fed. Before a bale is formed, each first wire 24 fed from below has been tied, by means of a twist 46, to an upper wire 26 fed from above during the tying of a previous bale.

A tying assembly is provided for arranging a loop of wire material 24, 25 around a bale and for holding a pair of end portions of the loop next to each other. According to the present example, the tying assembly includes lower guide rollers 30, 31 located closely along the bottom of the pressing channel 1, for guiding lower wires 24 fed from respective spools (not shown) into the pressing channel 1 and loop supply members for pulling up lower wires 24 from adjacent to the bottom of the bale pressing channel 1. The loop supply members are in the form of rods reciprocally movable in longitudinal direction of the rods and are suspended in positions on a first, upper side of the bale pressing channel 1 and in pressing direction of the feed passage 7 and each have a hook adjacent to a free end for catching the lower wires 24 on a second, lower side of the bale pressing channel 1 and for catching the upper wire on the upper side of the bale pressing channel 1. The loop supply members are movable between an extended, lowermost position as indicated by dash and dot lines in Fig. 1 and a retracted, uppermost position as shown in full lines in Fig. 1. In the retracted position, the loop supply members are on the upper side of the bale pressing channel. Each time after a bale is pushed out of the pressing chamber 6, the loop supply members are extended through passages 27 in an upper wall 12 of the pressing channel 1 and through slots (not shown) in the pressing ram 3, catch the lower wires 24 that extend closely along the bottom of the pressing channel 1 and pull up loops of the wires 24 to form temporary loops projecting above the pressing channel 1. During a last portion of the upward movement, the loop supply members also catch and entrain the upper wires 25 into temporary loops so that the temporary loops of upper and lower wire material 24, 25 commonly extend along the loop supply members.

While in the present example, the first side is the upper side of the bale pressing channel and the second side is the lower side of the bale pressing channel, the first and second sides may also be opposite lateral sides of the bale pressing channel or upper and lower sides may be reversed.

For connecting end portions of the loops of wires 24, 25 near the bale 20 to each other, connectors in the form of twisters are arranged for engaging the pairs of end portions near the bale and moving an engaged section of at least one of each of the pairs of end portions about a longitudinal axis of the other such that the pairs of end portions are twisted into wire twists 40 between the twisters and the respective portions of the loops extending about the bale 20.

Furthermore, a second set of connectors in the form of twisters is provided for engaging pairs of end portions of the wires 24, 25 extending to the twisters from the respective supply spools and moving engaged sections of the end portions about longitudinal axes of the other section of each pair such that the end portions are also twisted into wire twists between the twisters and more remote sections of the upper and lower wires 24, 25. These twists 46 connect the respective upper and lower wires 24, 25 to each other, such that when a new bale is pressed out of the pressing chamber 6, the upper and lower wires 24, 25 are pulled around the bale and form the downstream portions of the new loops being formed around that bale.

After the twists 40, 46 have at least partially been made, the wires 24, 25 are cut between the respective loop supply members by a cutter.

In the present example wire guiding rollers 31, 32 are mounted to the walls 12, 13.

The baling press further has a closure 23 movable between an open and a closed position. The closure 23 closes off an opening in a wall of the pressing chamber 6 when in a closed position and allows a person to at least partially access the pressing chamber 6 via the opening when in an open position.

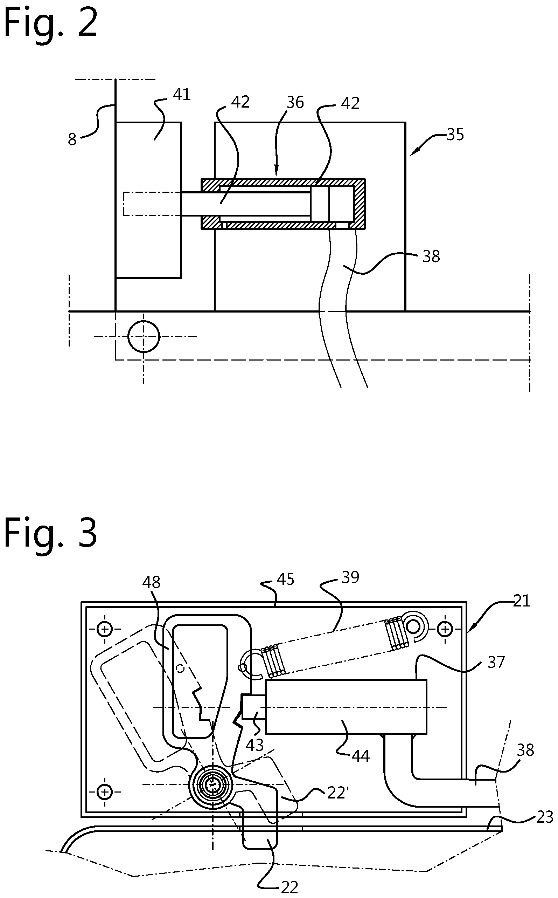

To a wall of the baling press near the opening and the closure 23, a lock 21 with a bolt 22 for locking the closure 23 is mounted. The lock 21 is operable for unlocking the closure 23 by moving the bolt 22 from a locking position 22 to a non-locking position 22' (see Fig. 3).

An operating member 35 is arranged for being operated when the prepress valve 8 is in the closed position. The operating member 35 is coupled to the lock 21 for unlocking of the lock 21 only if the operating member 35 is operated by the prepress valve 8 in or near its closed position.

Because the lock 21 is operated by the operating member 35 for unlocking the closure 23 only if the operating member 35 is operated by the prepress valve 8 in or near its closed position, the closure can only be opened if the prepress valve is closed or almost closed. Thus it is avoided that material to be pressed can drop onto a person or a portion of a person in the pressing chamber 6 even though the baling press is cut off from the power supply and thus inactive. Material may for instance drop down the feeding chute 5 even though a baling press is inactive, for instance if material has become stuck in the feeding chute 5 but loosens from the feeding chute 5.

Preferably, the lock only unlocks the closure if the prepress valve is fully closed. However, it may also be advantageous if the lock also unlocks the closure if the prepress valve is nearly closed. If the prepress valve is opened by less than 10% and in particular if it is opened by less than 5%, relatively little risk is associated with material dropping through the small percentage of the surface area of the feeding chute cross-sectional area that is left open by the prepress valve.

Because the closure 23 is also provided with a switch that cuts off power supply from the baling press if the closure is opened or requires the power supply to be cut off if the closure 23 is to be opened, the operating member 35 and the lock 21 must operate also if there is no power supply to the baling press. This can be achieved in a reliable manner if, as in the example shown in Figs. 2 and 3, the operating member 35 is provided with a hydraulic or pneumatic master cylinder 36 and the lock 21 includes a slave cylinder 37 coupled to the bolt 22 for moving the bolt 22 between a locked and an unlocked position. The master cylinder 36 and the slave cylinder 37 communicate via a hydraulic or pneumatic conduit 38.

To ensure safe operation, the lock 21 is provided with a spring 39 that urges the bolt 22 into its closed position. If the prepress valve 8 is closed, a projection 41 presses a piston of the master cylinder 36 into a housing 42 of the master cylinder 36. This causes fluid to be pressed into the conduit 38, so that a piston 43 of the slave cylinder 37 is pressed out of a housing 44 of the slave cylinder 37. This displacement of the piston 43 of the slave cylinder 37 causes the bolt 22 to be pressed towards an unlocking position 22' against a pulling force exerted by the spring 39.

When the prepress valve 8 closes again, the piston 43 of the master cylinder 36 is allowed to move out of the housing 42 of the master cylinder 36 again. Then, the force exerted by the spring 39 causes the piston 43 of the slave cylinder 37 to be pressed back into the housing 44 of the slave cylinder 37, the displacement of fluid through the conduit 38 causing the piston 43 of the master cylinder 36 to move out of the housing 42 of the master cylinder 36 again.

The conduit 38 preferably extends through a flexible hose or tube, so that relative positions of the operating member and the lock can be selected freely within a range sufficiently large to allow the safety system to be mounted to a variety of baling presses. This is particularly advantageous for backward compatibility with installed baling presses.

In some special situations, access to the pressing chamber is required even though the prepress valve is open or partially open. While the safety system shown in Figs. 2 and 3 prevents such access as a routine procedure, the lock 21 is arranged for being unlocked by means of a key that allows opening of the housing 45 of the lock 21, independently of the position of the prepress valve 8. Once the housing has been removed, the bolt can be operated directly by means of a handle portion 48 of the bolt 22. Such a key can for instance be kept by a supervising person, to ensure that the pressing chamber 6 is only accessed while the prepress valve is open when particular safety precautions are observed, such as inspection of the feeding chute 5 for stuck material, arranging a shield in the pressing chamber and/or only accessing the pressing chamber by means of tools while no body parts of personnel enter the pressing chamber.

The coupling between the prepress valve operated operating member and the lock may also be provided in many other forms, such as mechanical, electrical and optical. The lock may be powered by the operating member or the operating member may only provide a signal causing or allowing the lock to be operated for releasing the closure. If the coupling is only for communication of a signal from the operating member to the lock, such communication may be direct or via a bus system operating also if the main power supply of the baling press is off. The coupling may be wired or wireless.

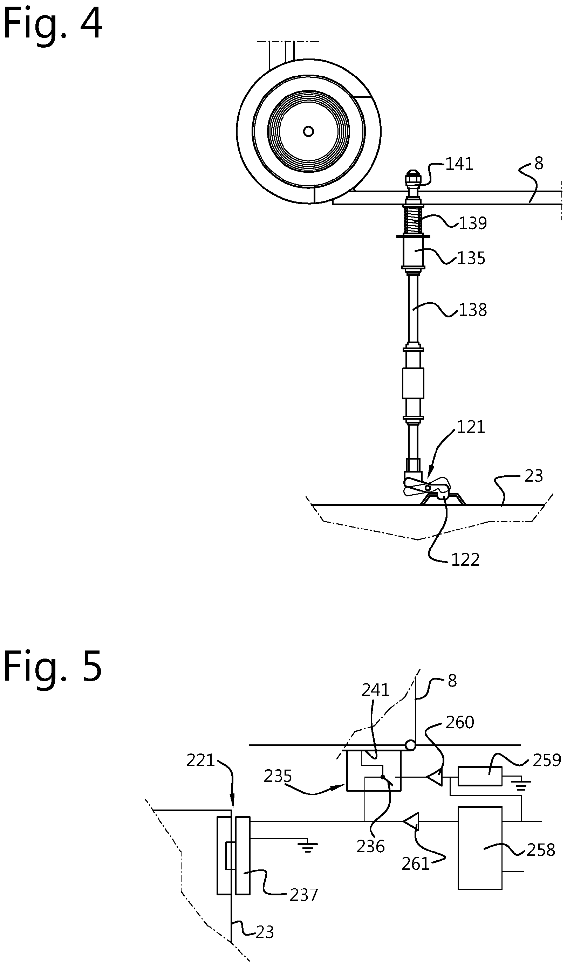

An example of a mechanical coupling is shown in Fig. 4. A mechanical coupling 138 of the operating member 135 and the lock 121 allows a particularly simple and low cost solution to be applied. In this example a projection 141 projecting from the prepress valve 8 displaces an operating member 135 if the prepress valve 8 is closed. The displacement is transferred via a connecting rod 138 to a lever type bolt 122 of the lock 121 and causes the closure 23 to be unlocked. When the prepress valve 8 opens again, a force exerted by a spring 139 urges the operating member 135, the lock 121 and the connection rod 138 back, so that the closure 23 is locked again.

If the mechanical connection is a flexible Bowden cable, relative positions of the operating member and the lock can be selected freely within a range sufficiently large to allow the safety system to be mounted to a variety of baling presses. This is particularly advantageous for backward compatibility with installed baling presses. The Bowden cable is preferably a push-pull Bowden cable, but may also be a pull Bowden cable co-operating with a spring member for causing the lock to run back when the operating member is not operated by the prepress valve in or near its closed position.

As is illustrated by Fig. 5, the operating member 235 may also include an electric switch 236 that is closed or opened in response to the prepress valve 8 reaching or approaching the closed position. The switch may for instance be operated by a switch engagement surface 241 of the prepress valve 8. The lock 221 includes an electric actuator 237 for unlocking the lock 221 in response to a voltage corresponding to a condition of the prepress valve 8 that occurs if the prepress valve 8 is in or near the closed position. The electric switch 236 is included in a circuit having a secondary power supply 259 for providing a voltage independently of a power supply 258 of the baling press, so that the electric unlocking can operate also if the main power supply 258 is switched off for allowing the closure 23 to be opened. Diodes 260, 261 are provided for allowing power to be supplied alternatively by either of the power supplies 258, 259.

If the switch 236 is arranged for opening if the prepress valve 8 is closed, the actuator 237 is for unlocking if no voltage is applied and the main power supply 258 and the secondary power supply 259 are connected in parallel, the system ensures that the closure is unlocked only if the main power supply of the baling press is switched off and the prepress valve 8 is closed. Thus, a separate switch for cutting off baling press power would not be needed or an additional safeguard against opening of the closure 23 without switching off of the main power supply is obtained.

Several features have been described as part of the same or separate embodiments. However, it will be appreciated that the scope of the invention as defined by the appended claims also includes embodiments having combinations of all or some of these features other than the specific combinations of features embodied in the examples.

## Claims

1. A baling press comprising:
a bale pressing channel (1);
a ram (2) reciprocally movable in a pressing chamber (6) portion of the bale pressing channel (1) for pressing material in the bale pressing channel;
a feeding chute (5) communicating with the pressing chamber (6) via a feed passage (7) forming a downstream end of the feeding chute;
a feeding chute valve (8) which, in closed position, closes off the feeding chute (5) near the pressing channel (1); and
a closure (23) movable between an open and a closed position, the closure closing off an opening in a wall of the pressing chamber (6) when the closure (23) is in a closed position and allowing a person to at least partially access the pressing chamber (6) via the opening when the closure (23) is in an open position;
**characterized by:**
a lock (21; 121; 221) with a bolt (22; 122) movable for locking and unlocking the closure (23), said lock (21; 121; 221) being operable for unlocking the closure (23); and
an operating member (35; 135; 235) arranged for being operated by the feeding chute valve (8) when the feeding chute valve (8) is in the closed position, said operating member (35; 135; 235) being coupled to the lock (21; 121; 221) for unlocking or allowing unlocking of the lock (21; 121; 221) only if the operating member (35; 135; 235) is operated by the feeding chute valve (8) in or near its closed position.

2. A baling press according to claim 1, wherein the operating member (35) comprises a hydraulic or pneumatic master cylinder (36) and wherein the lock (21) includes a slave cylinder (37) coupled to the bolt (22) for moving the bolt between a locked and an unlocked position, the master cylinder and the slave cylinder communicating via a hydraulic or pneumatic conduit (38).

3. A baling press according to claim 1, wherein the operating member (135) and the lock (121) are mechanically coupled.

4. A baling press according to claim 3, wherein the mechanical coupling is a flexible Bowden cable.

5. A baling press according to claim 1, wherein the operating member (235) includes an electric switch (236) that is closed or opened in response to the feeding chute valve (8) reaching or approaching the closed position, wherein the lock (221) includes an electric actuator (237) for unlocking the lock in response to a voltage corresponding to a condition of the switch if the feeding chute valve (8) is in or near the closed position, the electric switch be included in a circuit having a power supply (259) for providing a voltage independently of a power supply (258) of the baling press.

6. A baling press according to any of the preceding claims, wherein the lock (21) is arranged for being unlocked or accessible for unlocking by means of a key, independently of the position of the feeding chute valve (8).

7. A method of operating a baling press, the baling press comprising:
a bale pressing channel (1);
a ram (2) reciprocally movable in a pressing chamber (6) portion of the bale pressing channel (1) for pressing material in the bale pressing channel (1);
a feeding chute (5) communicating with the pressing chamber (6) via a feed passage (7) forming a downstream end of the feeding chute;
a feeding chute valve (8) which, in closed position, closes off the feeding chute (5) near the pressing channel (1); and
a closure (23) movable between an open and a closed position, the closure (23) closing off an opening in a wall of the pressing chamber when the closure (23) is in a closed position and allowing a person to at least partially access the pressing chamber (6) via the opening when the closure (23) is in an open position;
**characterized in that** the baling press further comprises:
a lock (21; 121; 221) with a bolt (22; 122) movable for locking the closure (23) and unlocking the closure (23); and
an operating member (35; 135; 235) coupled to the lock (21; 121; 221);
wherein the lock (21; 121; 221) is operated by the operating member (35; 135; 235) for unlocking or allowing unlocking of the closure (23) only if the operating member (35; 135; 235) is operated by the feeding chute valve (8) in or near its closed position.

## Patentansprüche

1. Ballenpresse, umfassend:
einen Ballenpresskanal (1);
einen Stempel (2), der in einem Abschnitt der Presskammer (6) des Ballenpresskanals (1) hin und her bewegt werden kann, um Material in den Ballenpresskanal zu pressen;
einen Zuführschacht (5), der mit der Presskammer (6) über einen Zuführkanal (7) verbunden ist, der ein stromabwärtiges Ende des Zuführschachtes bildet;
ein Zuführschachtventil (8), das in geschlossener Position den Zuführschacht (5) in der Nähe des Presskanals (1) verschließt; und
einen Verschluss (23), der zwischen einer offenen und einer geschlossenen Position bewegt werden kann, wobei der Verschluss eine Öffnung in einer Wand der Presskammer (6) verschließt, wenn sich der Verschluss (23) in einer geschlossenen Position befindet, und es einer Person ermöglicht, wenigstens teilweise über die Öffnung in die Presskammer (6) zu gelangen, wenn sich der Verschluss (23) in einer offenen Position befindet;
**gekennzeichnet durch:**
ein Schloss (21; 121; 221) mit einem Riegel (22; 122), der zum Ver- und Entriegeln des Verschlusses (23) bewegt werden kann, wobei das Schloss (21; 121; 221) zum Entriegeln des Verschlusses (23) betätigt werden kann; und
ein Betätigungselement (35; 135; 235), das so angeordnet ist, dass es durch das Zuführschachtventil (8) betätigt wird, wenn sich das Zuführschachtventil (8) in der geschlossenen Position befindet, wobei das Betätigungselement (35; 135; 235) mit dem Schloss (21; 121; 221) gekoppelt ist, um das Schloss (21; 121; 221) nur dann zu entriegeln oder ein Entriegeln zu ermöglichen, wenn das Betätigungselement (35; 135; 235) durch das Zuführschachtventil (8) in oder nahe seiner geschlossenen Position betätigt wird.

2. Ballenpresse nach Anspruch 1, wobei das Betätigungselement (35) einen hydraulischen oder pneumatischen Hauptzylinder (36) umfasst und wobei das Schloss (21) einen Nehmerzylinder (37) einschließt, der mit dem Riegel (22) gekoppelt ist, um den Riegel zwischen einer verriegelten und einer entriegelten Position zu bewegen, wobei der Hauptzylinder und der Nehmerzylinder über eine hydraulische oder pneumatische Leitung (38) verbunden sind.

3. Ballenpresse nach Anspruch 1, wobei das Betätigungselement (135) und der Verschluss (121) mechanisch gekoppelt sind.

4. Ballenpresse nach Anspruch 3, wobei die mechanische Kupplung ein flexibler Bowdenzug ist.

5. Ballenpresse nach Anspruch 1, wobei das Betätigungselement (235) einen elektrischen Schalter (236) einschließt, der als Reaktion darauf geschlossen oder geöffnet wird, dass das Zuführschachtventil (8) die geschlossene Position erreicht oder sich ihr nähert, wobei die Verriegelung (221) ein elektrisches Betätigungselement (237) zum Entriegeln der Verriegelung als Reaktion auf eine einem Zustand des Schalters entsprechende Spannung einschließt, wenn sich das Zuführschachtventil (8) in oder nahe der geschlossenen Position befindet, wobei der elektrische Schalter in einer Schaltung mit einer Stromversorgung (259) zur Bereitstellung einer Spannung unabhängig von einer Stromversorgung (258) der Ballenpresse enthalten ist.

6. Ballenpresse nach einem der vorhergehenden Ansprüche, wobei das Schloss (21) so angeordnet ist, dass es unabhängig von der Position des Zuführschachtventils (8) mittels eines Schlüssels entriegelt wird oder zum Entriegeln zugänglich ist.

7. Verfahren zum Betätigen einer Ballenpresse, wobei die Ballenpresse umfasst:
einen Ballenpresskanal (1);
einen Stempel (2), der in einem Abschnitt der Presskammer (6) des Ballenpresskanals (1) hin und her bewegt werden kann, um Material in den Ballenpresskanal (1) zu pressen;
einen Zuführschacht (5), der mit der Presskammer (6) über einen Zuführkanal (7) verbunden ist, der ein stromabwärtiges Ende des Zuführschachtes bildet;
ein Zuführschachtventil (8), das in geschlossener Position den Zuführschacht (5) in der Nähe des Presskanals (1) verschließt; und
einen Verschluss (23), der zwischen einer offenen und einer geschlossenen Position bewegt werden kann, wobei der Verschluss (23) eine Öffnung in einer Wand der Presskammer verschließt, wenn sich der Verschluss (23) in einer geschlossenen Position befindet, und es einer Person ermöglicht, wenigstens teilweise über die Öffnung in die Presskammer (6) zu gelangen, wenn sich der Verschluss (23) in einer offenen Position befindet;
**dadurch gekennzeichnet, dass** die Ballenpresse außerdem umfasst:
ein Schloss (21; 121; 221) mit einem Riegel (22; 122), der zum Verriegeln des Verschlusses (23) und zum Entriegeln des Verschlusses (23) bewegt werden kann; und
ein Betätigungselement (35; 135; 235), das mit dem Schloss (21; 121; 221) gekoppelt ist;
wobei das Schloss (21; 121; 221) durch das Betätigungselement (35; 135; 235) betätigt wird, um den Verschluss (23) nur dann zu entriegeln oder ein Entriegeln zu ermöglichen, wenn das Betätigungselement (35; 135; 235) durch das Zuführschachtventil (8) in oder nahe seiner geschlossenen Position betätigt wird.

## Revendications

1. Presse à balles comprenant :
un canal de pressage de balles (1);
un vérin (2) mobile en va-et-vient dans une partie de chambre de pressage (6) du canal de pressage de balles (1) pour presser le matériau dans le canal de pressage de balles ;
une goulotte d'alimentation (5) communiquant avec la chambre de pressage (6) par un passage d'alimentation (7) formant une extrémité aval de la goulotte d'alimentation ;
une vanne de goulotte d'alimentation (8) qui, en position fermée, obture la goulotte d'alimentation (5) à proximité du canal de pressage (1) ; et
une fermeture (23) mobile entre une position ouverte et une position fermée, la fermeture obturant une ouverture dans une paroi de la chambre de pressage (6) lorsque la fermeture (23) est dans une position fermée et permettant à une personne d'accéder au moins partiellement à la chambre de pressage (6) via l'ouverture lorsque la fermeture (23) est en position ouverte ;
**caractérisé par**:
un verrou (21 ; 121 ; 221) avec un pêne (22 ; 122) mobile pour verrouiller et déverrouiller la fermeture (23), ledit verrou (21 ; 121 ; 221) pouvant être actionnée pour déverrouiller la fermeture (23) ; et
un organe d'actionnement (35 ; 135 ; 235) agencé pour être actionné par la vanne de goulotte d'alimentation (8) lorsque la vanne de goulotte d'alimentation (8) est en position fermée, ledit organe d'actionnement (35 ; 135 ; 235) étant couplé au verrou (21 ; 121 ; 221) pour déverrouiller ou permettre le déverrouillage du verrou (21 ; 121 ; 221) uniquement si l'organe d'actionnement (35 ; 135 ; 235) est actionné par la vanne de goulotte d'alimentation (8) dans ou près de sa position fermée.

2. Presse à balles selon la revendication 1, dans laquelle l'organe d'actionnement (35) comprend un maître-cylindre hydraulique ou pneumatique (36) et dans lequel le verrou (21) comprend un cylindre esclave (37) couplé au pêne (22) pour déplacer le pêne entre une position verrouillée et une position déverrouillée, le maître-cylindre et le cylindre esclave communiquant par l'intermédiaire d'un conduit hydraulique ou pneumatique (38).

3. Presse à balles selon la revendication 1, dans laquelle le l'organe d'actionnement (135) et le verrou (121) sont couplés mécaniquement.

4. Presse à balles selon la revendication 3, dans laquelle le couplage mécanique est un câble Bowden flexible.

5. Presse à balles selon la revendication 1, dans laquelle l'organe d'actionnement (235) comprend un interrupteur électrique (236) qui est fermé ou ouvert en réponse au fait que la vanne de goulotte d'alimentation (8) atteint ou approche la position fermée, dans lequel le verrou ( 221) comprend un actionneur électrique (237) pour déverrouiller le verrou en réponse à une tension correspondant à une condition de l'interrupteur si le vanne de goulotte d'alimentation (8) est dans ou proche de la position fermée, l'interrupteur électrique étant inclus dans un circuit ayant une alimentation électrique (259) pour fournir une tension indépendamment d'une alimentation électrique (258) de la presse à balles.

6. Presse à balles selon l'une quelconque des revendications précédentes, dans laquelle le verrou (21) est agencé pour être déverrouillé ou accessible pour déverrouillage au moyen d'une clé, indépendamment de la position de la vanne de goulotte d'alimentation (8).

7. Procédé d'exploitation d'une presse à balles, la presse à balles comprenant :
un canal de pressage de balles (1);
un vérin (2) mobile en va-et-vient dans une partie de chambre de pressage (6) du canal de pressage de balles (1) pour presser le matériau dans le canal de pressage de balles ;
une goulotte d'alimentation (5) communiquant avec la chambre de pressage (6) par un passage d'alimentation (7) formant une extrémité aval de la goulotte d'alimentation ;
une vanne de goulotte d'alimentation (8) qui, en position fermée, obture la goulotte d'alimentation (5) à proximité du canal de pressage (1) ; et
une fermeture (23) mobile entre une position ouverte et une position fermée, la fermeture (23) obturant une ouverture dans une paroi de la chambre de pressage (6) lorsque la fermeture (23) est dans une position fermée et permettant à une personne d'accéder au moins partiellement à la chambre de pressage (6) via l'ouverture lorsque la fermeture (23) est en position ouverte ;
**caractérisée en ce que** la presse à balles comprend en outre :
un verrou (21 ; 121 ; 221) avec un pêne (22 ; 122) mobile pour verrouiller la fermeture (23) et déverrouiller la fermeture (23); et
un organe d'actionnement (35 ; 135 ; 235) couplé au verrou (21 ; 121 ; 221) ;
dans lequel le verrou (21 ; 121 ; 221) est actionné par l'organe d'actionnement (35 ; 135 ; 235) pour déverrouiller ou permettre le déverrouillage de la fermeture (23) uniquement si l'organe d'actionnement (35 ; 135 ; 235) est actionné par le vanne de goulotte d'alimentation (8) dans ou près de sa position fermée
